# EUROPÄISCHE PATENTSCHRIFT

(11) **EP 2 857 605 B1**
(45) Veröffentlichungstag und Bekanntmachung des Hinweises auf die Patenterteilung: **19.10.2016**
(21) Anmeldenummer: 14179122.8
(22) Anmeldetag: 30.07.2014
(51) Int. Cl.: E04B 1/16, E04G 9/08, E04G 9/10, E21D 11/10, E21D 11/15, E21F 16/02

(54) **Schalungselement**
Formwork element
Élément de coffrage

(30) Priorität: 07.10.2013 DE 102013111056
(43) Veröffentlichungstag der Anmeldung: 08.04.2015
(73) Patentinhaber: Peca Verbundtechnik GmbH, 94339 Leiblfing (DE)
(72) Erfinder: Grüdl, Robert, 96337 Ludwigstadt (DE)
(74) Vertreter: Glück Kritzenberger Patentanwälte PartGmbB

(56) Entgegenhaltungen:
- DE-A1- 2 400 895
- DE-A1- 2 935 645
- DE-A1- 3 436 690
- DE-A1- 3 601 884
- DE-C1- 3 815 870
- NL-C2- 1 010 629

## Beschreibung

### Technisches Gebiet

Die Erfindung bezieht sich auf ein Verfahren zur Herstellung unregelmäßig geformter Betonoberflächen.

### Stand der Technik

Aus dem Stand der Technik ist eine Vielzahl von Schalungselementen für den Betonbau bekannt. Insbesondere sind auch Schalungselemente bekannt, die aus einem Verbundwerkstoff bestehen, der ein metallisches Gitterwerk und auf dieses Gitterwerk aufgeschrumpfte Folien aufweist.

Die EP 75 641 A1 beschreibt einen Verbundwerkstoff aus einem metallischen Gitterwerk und einer ein- oder beidseitig angebrachten, die Gitteröffnungen bedeckenden, flexiblen Schrumpffolie aus Kunststoff. Zur Herstellung des Verbundwerkstoffs werden die Kunststofffolie und das metallische Gitterwerk in Bahnen oder Stücken parallel und fluchtend aufeinander gelegt und in dieser Lage die Kunststofffolie auf das Gitterwerk aufgeschrumpft. Die Folie und das Gitterwerk werden dabei kontinuierlich aus je einem Vorrat abgezogen und aufeinander liegend einer Schrumpfeinrichtung zugeführt. In der Schrumpfeinrichtung wird die Kunststofffolie mittels eines Heißgasstromes erweicht und gegen das Gitterwerk gedrückt.

Die DE 20 2009 004 864 U1 beschreibt eine verlorene Schalung für den Betonbau, die eine erste seitliche Schalungswandung, eine zweite seitliche Schalungswandung und ein Bodenteil aufweist. Die beiden seitlichen Schalungswandungen bestehen aus dem aus der EP 75 641 A1 bekannten Verbundwerkstoff. Zumindest eine Begrenzungskante der ersten seitlichen Schalungswandung ist durch einen Längsstab gebildet, wobei das Bodenteil derart mit zumindest dieser ersten seitlichen Schalungswandung verbunden ist, dass das Bodenteil um die Begrenzungskante der ersten seitlichen Schalungswandung schwenkbar ausgebildet ist.

Aus der WO 2008/128683 A1 ist ebenfalls ein Schalungselement bekannt, das aus einem von einer Folie umhüllten Gitterwerk besteht. Das Gitterwerk ist in diesem Falls aus mindestens zwei getrennten Gittermatten aufgebaut, wobei die beiden Gittermatten von einer gemeinsamen Folie umhüllt werden.

Die von der DE 20 2009 004 864 U1 und der WO 2008/128683 A1 offenbarten Schalungen verbessern die Einsatzmöglichkeiten der aus der EP 75 641 A1 bekannten Schalungselemente insoweit, dass die Schalungselemente in einer ebenen Form auf die Baustelle transportiert und erst vor Ort auf einfache Weise in die gewünschte, beispielsweise U-förmige Gestalt gebracht werden können.

Trotz der durch das schwenkbare Bodenteil bzw. die in einer gemeinsamen Folie angeordneten getrennten Gittermatten ermöglichte Verwendung der Schalungselemente in einer nicht-planen Form, bleiben die Einsatzmöglichkeiten der bekannten Schalungselemente auf die Herstellung ebener Betonoberflächen beschränkt.

Aus der DE 24 00 895 A1 ist ein Schalungselement bestehend aus einer Baugittermatte mit Halterungen für eine als Abdeckung der Außenfläche der Baugittermatte dienende Folie bekannt. An ihrer Innenfläche weist die Baugittermatte vorspringende Versteifungsbügel auf. Das Schalungselement dient als Hohlraumausbautafel und kann innerhalb gewisser Grenzen angepasst an die Krümmung des Hohlraums verformt werden. Dieses Dokument wird als nächstliegender Stand der Technik angesehen.

### Darstellung der Erfindung

Hier setzt die Erfindung an. Es soll ein Verfahren zur Herstellung unregelmäßig geformter Betonoberflächen zur Verfügung gestellt werden, das eine einfache Herstellung unregelmäßig geformter Betonoberflächen ermöglicht. Diese Aufgabe wird erfindungsgemäß durch das Verfahren gemäß unabhängigem Patentanspruch 1 gelöst. Weitere vorteilhafte Aspekte, Details und Ausgestaltungen der Erfindung ergeben sich aus den abhängigen Ansprüchen, der Beschreibung sowie der Zeichnung.

Wie bereits erwähnt ist aus dem Stand der Technik eine Reihe von Verbundwerkstoffen mit einem metallischen Gitterwerk und einer auf das Gitterwerk aufgebrachten Kunststofffolie bekannt. Der Stand der Technik geht übereinstimmend davon aus, dass das als Traggerüst ausgestaltete Gitterwerk für die notwendige Festigkeit des Verbundwerkstoffs sorgen muss, um dem während des Betonierens zunehmenden Betondruck Stand zu halten. Diese Festigkeit wird durch den Einsatz von Baustahlmatten als Gitterwerk erreicht, wobei die Stäbe der Baustahlmatten bekanntermaßen einen Durchmesser von mindestens 6 mm und bis 12 mm aufweisen. Eine Verformung der bekannten Schalungselemente ist nur mit Biegewerkzeugen möglich und dadurch zeit- und kostenintensiv.

Überraschenderweise wurde nunmehr festgestellt, dass auch ein Gitterwerk, das aus wesentlich dünneren Drähten aufgebaut ist, in einer Weise gestaltet werden kann, die die Herstellung von Schalungselementen erlaubt, welche trotz der Verwendung dünner Drähte dem Betondruck formstabil Stand halten.

Die vorliegende Erfindung stellt ein Verfahren zur Herstellung unregelmäßig geformter Betonoberflächen zur Verfügung. Das Verfahren umfasst die Schritte:
- Bereitstellen eines Schalungselements für den Betonbau, wobei das Schalungselement (1) aus einem aus Quer- (2) und Längsstäben (3) aufgebauten metallischen Gitterwerk und aus zwei das Gitterwerk beidseitig bedeckenden, flexiblen Schrumpffolien (4, 5) besteht, wobei die beiden Schrumpffolien (4, 5) durch die Öffnungen des Gitterwerks miteinander verbunden sind, wobei die Quer-(2) und Längsstäbe (3) des Gitterwerks einen Durchmesser von 1,5 mm bis 3,5 mm aufweisen und die Öffnungen des Gitterwerks eine lichte Weite von 50 mm bis 120 mm aufweisen, wobei es sich bei der lichten Weite um den größten, zwischen den einer Öffnung des Gitterwerks zugewandten Rändern der die Öffnungen begrenzenden Stäbe bestehenden Abstand handelt,
- Bereitstellen einer mit Abstandshalter ausgestatteten Bewehrungsoberfläche,
- Bereitstellen einer aus horizontal und vertikal angeordneten Stützelementen bestehenden Stützvorrichtung,
- Biegen des Schalungselements in die für die zu betonierende Betonoberfläche gewünschte Form,
- Befestigen der Bewehrung an der Stützvorrichtung, wobei zwischen Bewehrung und Stützvorrichtung Abstandhalter aus einem nicht korrodierenden Material angeordnet sind
- Positionieren des Schalungselements an den Abstandshaltern,
- Befestigung des Schalungselements an der Bewehrung,
- Aufbringen von Spritzbeton von der Bewehrungsseite her.

Unter dem "Durchmesser" der Quer- und Längsstäbe des Gitterwerks wird im Rahmen der vorliegenden Anmeldung der Durchmesser der Stäbe in Querschnitt, also im Schnitt mit einer Schnittebene senkrecht zur Längsausdehnung der Stäbe. Im Regelfall handelt es sich bei den verwendeten Stäben um Stäbe mit einem im Wesentlichen kreisförmigen Querschnitt, die folglich einen einzigen messbaren Durchmesser aufweisen. Im Falle von anders geformten, also im Querschnitt beispielsweise rechteckigen, quadratischen oder elliptischen geformten Stäben wird unter dem "Durchmesser" der größte messbare Durchmesser verstanden, also im Falle eines quadratischen oder rechteckigen Querschnitts die Länge der Diagonalen des Quadrats oder des Rechtecks.

Unter einer "lichten Weite" wird im Rahmen der vorliegenden Anmeldung der Abstand zwischen den einer Öffnung des Gitterwerks zugewandten Rändern der die Öffnungen begrenzenden Stäbe verstanden. Da die Anordnung der Quer- und Längsstäbe relativ zueinander in der allgemeinsten Form der Erfindung im Wesentlichen beliebig ausgebildet sein kann, können die Öffnungen des Gitterwerks beliebige Formen besitzen. Es kann sogar ein bestimmtes Gitterwerk eines Schalungselements grundsätzlich auch unterschiedlich geformte Öffnungen aufweisen. Unter der "lichten Weite" wird daher grundsätzlich der größte zwischen den einer Öffnung des Gitterwerks zugewandten Rändern der die Öffnungen begrenzenden Stäbe bestehende Abstand verstanden. Im Falle von quadratischen oder rechteckigen Öffnungen ist die lichte Weite der Öffnung mit der Länge der Diagonalen des Quadrats oder des Rechtecks identisch.

Unter einer "unregelmäßig geformten Betonoberfläche" wird im Rahmen der vorliegenden Anmeldung jede willkürlich unregelmäßig geformte Betonoberfläche verstanden, also jede Betonoberfläche, die nicht über größere Abschnitte hinweg eben ausgebildet ist oder die keine periodisch wiederkehrende Strukturen aufweist. Durch "unregelmäßig geformte Betonoberflächen" im Sinne der vorliegenden Erfindung können beispielsweise Felsen, Steinoberflächen, Felswände, usw. imitiert oder nachgeformt werden.

Durch die erfindungsgemäß vorgesehene Kombination eines bestimmten Durchmessers der Quer- und Längsstäbe des Gitterwerks und der lichten Weite der Öffnungen des Gitterwerks wird ein Schalungselement geschaffen, dass einerseits eine ausreichende Formstabilität aufweist, um den beim Betonieren auftretenden Betondruck Stand zu halten und das andererseits vor Ort auf der Baustelle in einfacher Weise von Hand oder unter Einsatz einfacher Werkzeuge wie Zangen in eine nahezu beliebige Form gebogen werden kann.

In Versuchen hat sich gezeigt, dass zur Erfüllung beider Bedingungen, nämlich ausreichende Formstabilität bei Belastung einerseits und leichte Biegbarkeit anderseits, die Quer- und Längsstäbe des Gitterwerks einen Durchmesser von 1,5 mm bis 3,5 mm aufweisen müssen und gleichzeitig die Öffnungen des Gitterwerks eine lichte Weite von 50 mm bis 120 mm besitzen müssen. Im Falle von Stäben, die dünner als 1,5 mm im Durchmesser sind bzw. Öffnungen des Gitterwerks, die eine lichte Weite größer als 120 mm aufweisen, geht die erforderliche Formstabilität des Schalungselements verloren. Im Falle von Stäben, die dicker als 3,5 mm im Durchmesser sind bzw. Öffnungen des Gitterwerks, die eine lichte Weite kleiner als 50 mm aufweisen, kann das Schalungselement nicht mehr vor Ort auf der Baustelle in die gewünschte Form gebogen werden.

Vorteilhafterweise kann das Schalungselement in flacher Form stapelweise platzsparend zur Baustelle transportiert werden. Das Biegen der Schalungselemente in die gewünschte Form erfolgt erst kurz vor dem Einsatz der Schalungselemente auf der Baustelle. Im Gegensatz zu einem Transport der Schalungselemente in ihrer fertig geformten Ausgestaltung können die erfindungsgemäßen Schalungselemente plan und somit platzsparend und kostengünstig als Flachmaterial transportiert werden.

Der vorgesehene Einsatz einer Schrumpffolie erleichtert die Herstellung der Schalungselemente im Vergleich zu herkömmlichen Kunststofffolien deutlich. Die Schrumpffolie ist auf das Gitterwerk aufgeschrumpft, wobei das Gitterwerk als ein die Schrumpfkräfte aufnehmendes Tragegerüst ausgebildet ist. Als Schrumpffolie kann eine Reihe von Kunststoffen in verschiedenen Stärken, eingefärbt oder durchsichtig verwendet werden. Als Schrumpffolie besonders gut geeignet sind Polyethylenfolien. Ein Verfahren und eine Vorrichtung zur Herstellung solcher Verbundwerkstoffe mit aufgeschrumpfter Kunststofffolie sind ausführlich in der EP 75 641 A1 beschrieben.

Ein verbesserter Korrosionsschutz des Gitterwerks wird dadurch erreicht, dass das Gitterwerk des Schalungselements von beiden Seiten mit jeweils einer Schrumpffolie bedeckt ist, die das Gitterwerk dann zwischen sich einschließen. Bevorzugt ist das Gitterwerk des Schalungselements durch ein Drahtgeflecht gebildet. Die Quer- und Längsstäbe des Gitterwerks sind in diesem Fall miteinander verflochten, die Querstäbe werden also abwechselnd über- und unterhalb der Längsstäbe geführt. Grundsätzlich können die Quer- und Längsstäbe des Gitterwerks an ihren Kreuzungsstellen aber auch miteinander verschweißt sein. In diesem Fall können beispielsweise sämtliche Querstäbe in einer Ebene oberhalb der Längsstäbe angeordnet sein.

Bevorzugt weisen die Quer- und Längsstäbe des Gitterwerks einen Durchmesser von 1,7 mm bis 3,0 mm, besonders bevorzugt einen Durchmesser von 1,9 mm bis 2,5 mm und insbesondere bevorzugt einen Durchmesser von rund 2,0 mm auf. Durch die genannten Durchmesser ist in zunehmender Weise gewährleistet, dass das Schalungselement eine ausreichende Festigkeit und Formstabilität bei gleichzeitig leichter Verformbarkeit aufweist.

Besondere Vorteile bei der Herstellung der Schalungselemente ergeben sich, wenn die Querstäbe des Gitterwerks und die Längsstäbe des Gitterwerks den gleichen Durchmesser aufweisen. In diesem Fall braucht zur Herstellung der Schalungselemente nur eine Art von Stäben bevorratet zu werden.

Gemäß einer weiteren, besonders bevorzugten Ausführungsform der vorliegenden Erfindung weisen die Öffnungen des Gitterwerks eine lichte Weite von 60 mm bis 100 mm, insbesondere bevorzugt eine lichte Weite von 70 mm bis 80 mm auf. Durch die genannten lichten Weiten ist in zunehmender Weise gewährleistet, dass das Schalungselement eine ausreichende Festigkeit und Formstabilität bei gleichzeitig leichter Verformbarkeit aufweist.

Bevorzugt weisen die Öffnungen des Gitterwerks die Form eines Quadrats, eines Rechtecks, einer Raute oder eines Hexagons auf. Bei der Herstellung der Schalungselemente ist es besonders einfach und unaufwändig, die Stäbe in regelmäßigen Abständen der Fertigungsstraße zuzuführen. Bei einem solchen Vorgehen ergeben sich Öffnungen des Gitterwerks in den genannten Formen, wobei eine quadratische Form der Öffnungen besonders bevorzugt wird, da diese Form eine über die gesamte Fläche des Schalungselements konstante Formstabilität und Biegbarkeit bewirkt. Grundsätzlich kann das Gitterwerk aber je nach Verwendungszweck aus rechtwinklig oder schräg gekreuzten, geflochtenen oder übereinander gelegten und miteinander verschweißten Stäben hergestellt werden.

Ganz besonders bevorzugt sind Ausführungsformen, gemäß denen die Öffnungen des Gitterwerks eine im Wesentlichen quadratische Form aufweisen und der Abstand zwischen den der Öffnung zugewandten Rändern der die Öffnung begrenzenden Stäben 50 mm bis 58 mm beträgt. Wird diese lichte Weite der Öffnungen mit einem Durchmesser der Quer- und Längsstäbe zwischen 1,9 mm und 2,1 mm, insbesondere rund 2,0 mm kombiniert, so ergibt sich ein Schalungselement mit idealen Eigenschaften hinsichtlich Formstabilität und Biegbarkeit.

Die oben beschriebenen Schalungselemente können zur Herstellung unregelmäßig geformter Betonoberflächen eingesetzt werden. Im Falle der Verwendung der Schalungselemente zur Herstellung unregelmäßig geformter Betonoberflächen bringt es ganz besondere Vorteile mit sich, dass die Schalungselemente erst vor Ort in die gewünschte Form gebogen werden. Dadurch kann auf einfache Weise eine Anpassung der gewünschten Betonoberfläche an die örtlichen Gegebenheiten vorgenommen werden.

Die vorliegende Erfindung umfasst ein Verfahren zur Herstellung unregelmäßig geformter Betonoberflächen unter Verwendung der oben beschriebenen Schalungselemente. Das Verfahren umfasst die Schritte Bereitstellen eines der oben beschriebenen Schalungselemente, Bereitstellen einer mit Abstandshalter ausgestatteten Bewehrungsoberfläche, Biegen des Schalungselements in die für die zu betonierende Betonoberfläche gewünschte Form, Positionieren des Schalungselements auf den Abstandshaltern, Befestigung des Schalungselements an der Bewehrung und Aufbringen von Spritzbeton von der Bewehrungsseite her. Auf diese Weise können willkürlich geformte Oberflächen wie beispielsweise Felsen, Steinoberflächen, Felswände, usw. hergestellt werden.

Erfindungsgemäß werden zusätzlich die Schritte Bereitstellen einer horizontal und vertikal angeordnete Stützelemente aufweisenden Stützvorrichtung und Befestigen der Bewehrung an der Stützvorrichtung, wobei zwischen Bewehrung und Stützvorrichtung Abstandhalter aus einem nicht korrodierenden Material angeordnet sind, durchgeführt. Für die Herstellung größerer Felswände oder Felsformationen ist eine Stützvorrichtung erforderlich, die sehr grob die Form der zu schaffenden künstlichen Gebilde nachbildet. Diese Stützvorrichtung ist üblicherweise aus horizontal und vertikal angeordneten Stützelementen in Form von Metallstreben ausgeführt. Die Bewehrung wird mit der Stützvorrichtung verbunden und zwar vorteilhafterweise derart, dass die horizontal angeordneten Stützelemente von der herzustellenden Felswand bzw. Felsformation aus gesehen über die Bewehrung hinaus vorstehen. Auf diesen vorstehenden horizontalen Stützelementen werden nachfolgend Laufstege angeordnet, die bei der künstlerischen Nachbearbeitung oder dem Aufbringen des Spritzbetons zum Einsatz kommen. Die über die Bewehrung hinausstehenden Teile der Stützelemente werden nach Abschluss dieser Arbeiten abgeschnitten und die verbleibenden Schnittoberflächen verkleidet. Durch die zwischen Bewehrung und Stützvorrichtung angeordneten Abstandhalter aus einem nicht korrodierenden Material wie beispielsweise Kunststoff oder Faserzement wird gewährleistet, dass die Bewehrung sicher vor Korrosion geschützt ist.

Beim Einsatz der Schalungselemente zur Herstellung größerer, unregelmäßig geformter Oberflächen, werden häufig mehrere, in handhabbarer Größe dimensionierte Schalungselemente benötigt. Diese Schalungselemente werden in ihren Randbereichen überlappend angeordnet, sodass relativ große, geschlossene Oberflächen gebildet werden können.

### Wege zur Ausführung der Erfindung

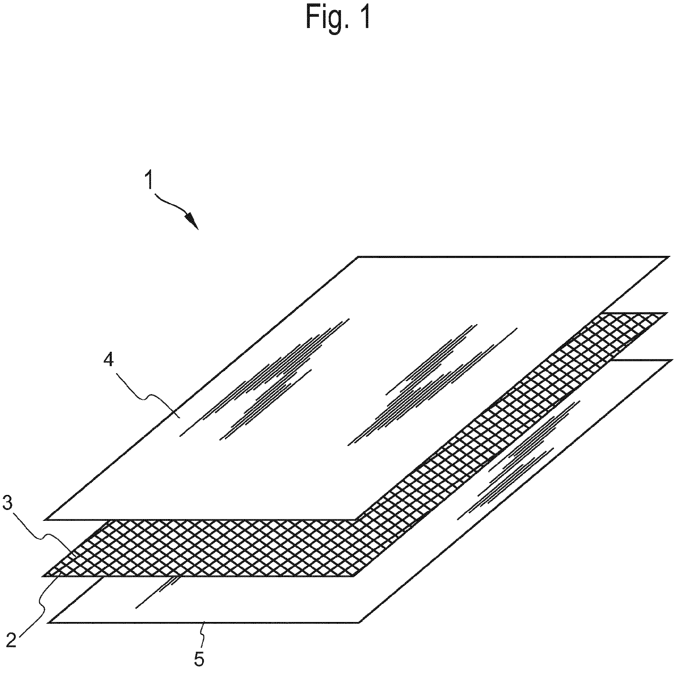

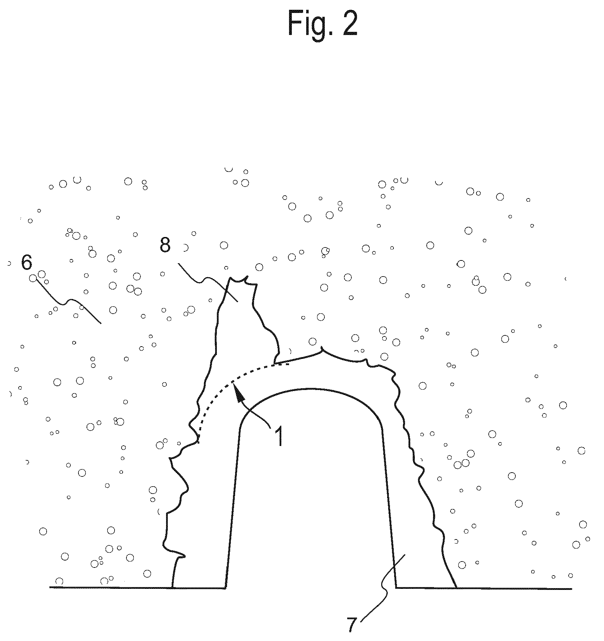

Die Erfindung soll nachfolgend anhand von Ausführungsbeispielen im Zusammenhang mit den Zeichnungen näher erläutert werden. Die Figur 1 zeigt eine auseinander gezogene Darstellung eines Schalungselements mit beidseitiger Schrumpffolie. Die Figur 2 zeigt im vertikalen Schnitt einen Tunnel mit einem solchen Schalungselement.

In Fig. 1 ist ein Schalungselement 1 für den Betonbau in auseinander gezogener Darstellung gezeigt. Das Schalungselement besteht aus einem aus Quer- 2 und Längsstäben 3 aufgebauten metallischen Gitterwerk. Das Gitterwerk ist von einer oberen und einer unteren Polyethylenfolie 4, 5 eingeschlossen. Bei den Polyethylenfolien 4 und 5 handelt es sich um Schrumpffolien, die durch Wärmeeinwirkung über das Gitterwerk gespannt und miteinander und mit dem Gitterwerk verbunden sind. Die Verbindungsstellen liegen am Rand und in den Gitteröffnungen.

Das Gitterwerk besteht aus rechtwinklig gekreuzt miteinander verbundenen Metallstäben 2, 3. Der Durchmesser der Quer- 2 und der Längsstäbe 3 beträgt 2,0 mm. Die Öffnungen des Gitterwerks weisen eine quadratische Form auf, wobei der Abstand zwischen den der jeweiligen Öffnung zugewandten Rändern der die Öffnung begrenzenden Stäbe 2, 3 rund 55 mm beträgt. Durch die Kombination einer lichten Weite der Öffnungen von 55 mm mit einem Durchmesser der Quer- und Längsstäbe von 2,0 mm ergibt sich ein Schalungselement mit idealen Eigenschaften hinsichtlich Formstabilität und Biegbarkeit.

Zur Herstellung des Schalungselements 1 wird ein vorgeschnittenes Stück des Gitterwerks in entsprechender Größe auf die Polyethylenfolie 5 aufgelegt. Über dem Gitter wird eine weitere Polyethylenfolie 4 angeordnet. Die beiden Polyethylenfolien 4, 5 werden durch Schrumpfen unter Wärmeeinwirkung mit dem Gitterwerk verbunden.

Die Figur 2 zeigt einen vertikalen Schnitt durch einen durch eine Felsformation 6 geführten Tunnel. Beim Tunnelbau werden oft größere Bohrungen bzw. Löcher geschaffen, als für die Ausformung der Tunnelwand 7 eigentlich erforderlich ist. Oft kommt es daher vor, dass an einem Bereich, an welchem eine Wand bzw. Decke oder Bogen durch Auftrag von Spritzbeton geformt werden soll, kein Untergrund sondern ein Hohlraum 8 vorhanden ist, gegen den dann kein Beton gespritzt werden kann. An solchen Stellen kommt das erfindungsgemäße Verfahren mit dem Schalungselement 1 zum Einsatz. Aufgrund seiner leichten Biegbarkeit kann das Schalungselement 1 problemlos in die gewünschte Form gebracht werden. Überraschenderweise zeigt sich, dass das Schalungselement nicht nur eine ausreichende Formstabilität aufweist sondern dass auch Spritzbeton erstaunlich gut an dem Schalungselement 1 haften bleibt.

Ein weiteres Einsatzgebiet des erfindungsgemäßen Verfahrens ist die Erstellung von Kletterwänden und künstlichen Felsenformationen. Zur Konstruktion einer Unterlage, gegen welche der Spritzbeton aufgetragen werden kann mussten bisher Stahlplatten oder Blechplatten miteinander verschweißt werden. Diese Platten mussten die gewünschte Oberfläche bereits relativ naturgetreu nachformen, um zu vermeiden, dass nachfolgend übermäßige Mengen an Spritzbeton aufgetragen werden müssen. Diese extrem aufwändigen Vorarbeiten werden durch die Verwendung des Schalungselements deutlich verringert. Es ist eine Stützvorrichtung erforderlich, an der die Bewehrung befestigt wird. Nachfolgend wird aber das Schalungselement auf einfache Weise per Hand direkt in die Form gebracht, die die zu schaffende Oberfläche später haben soll, und an der Bewehrung befestigt. Anschließend erfolgt der Auftrag von Spritzbeton.

## Patentansprüche

1. Verfahren zur Herstellung unregelmäßig geformter Betonoberflächen umfassend die Schritte
- Bereitstellen eines Schalungselements für den Betonbau, wobei das Schalungselement (1) aus einem aus Quer- (2) und Längsstäben (3) aufgebauten metallischen Gitterwerk und aus zwei das Gitterwerk beidseitig bedeckenden, flexiblen Schrumpffolien (4, 5) besteht, wobei die beiden Schrumpffolien (4, 5) durch die Öffnungen des Gitterwerks miteinander verbunden sind, wobei die Quer- (2) und Längsstäbe (3) des Gitterwerks einen Durchmesser von 1,5 mm bis 3,5 mm aufweisen und die Öffnungen des Gitterwerks eine lichte Weite von 50 mm bis 120 mm aufweisen, wobei es sich bei der lichten Weite um den größten, zwischen den einer Öffnung des Gitterwerks zugewandten Rändern der die Öffnungen begrenzenden Stäbe bestehenden Abstand handelt,
- Bereitstellen einer mit Abstandshalter ausgestatteten Bewehrungsoberfläche,
- Bereitstellen einer aus horizontal und vertikal angeordneten Stützelementen bestehenden Stützvorrichtung,
- Biegen des Schalungselements in die für die zu betonierende Betonoberfläche gewünschte Form,
- Befestigen der Bewehrung an der Stützvorrichtung, wobei zwischen Bewehrung und Stützvorrichtung Abstandhalter aus einem nicht korrodierenden Material angeordnet sind
- Positionieren des Schalungselements an den Abstandshaltern,
- Befestigung des Schalungselements an der Bewehrung,
- Aufbringen von Spritzbeton von der Bewehrungsseite her.

2. Verfahren nach Anspruch 1, **dadurch gekennzeichnet, dass** es sich bei den flexiblen Schrumpffolien (4, 5) um Polyethylenfolien handelt.

3. Verfahren nach einem der Ansprüche 1 oder 2, **dadurch gekennzeichnet, dass** die Quer- (2) und Längsstäbe (3) des Gitterwerks einen Durchmesser von 1,7 mm bis 3,0 mm, bevorzugt einen Durchmesser von 1,9 mm bis 2,5 mm, besonders bevorzugt einen Durchmesser von rund 2,0 mm aufweisen.

4. Verfahren nach einem der Ansprüche 1 bis 3, **dadurch gekennzeichnet, dass** die Querstäbe (2) des Gitterwerks und die Längsstäbe (3) des Gitterwerks den gleichen Durchmesser aufweisen.

5. Verfahren nach einem der Ansprüche 1 bis 4, **dadurch gekennzeichnet, dass** die Öffnungen des Gitterwerks eine lichte Weite von 60 mm bis 100 mm, bevorzugt eine lichte Weite von 70 mm bis 80 mm aufweisen.

6. Verfahren nach einem der Ansprüche 1 bis 5, **dadurch gekennzeichnet, dass** die Öffnungen des Gitterwerks die Form eines Quadrats, eines Rechtecks oder einer Raute aufweisen.

## Claims

1. A method for producing irregularly shaped concrete surfaces, comprising the steps
- providing a formwork element for concrete structures, wherein the formwork element (1) consists of a metallic latticework built from transverse (2) and longitudinal rods (3) and from two flexible shrink-wrap films (4, 5) covering the latticework on both sides, wherein the two shrink-wrap films (4, 5) are connected to one another through the openings of the latticework, wherein the transverse (2) and longitudinal rods (3) of the latticework have a diameter of 1.5 mm to 3.5 mm and the openings of the latticework have a clear width of 50 mm to 120 mm, wherein the clear width is the largest distance that exists between the edges, which face an opening of the latticework, of rods delimiting the openings,
- providing a reinforcement surface equipped with spacers,
- providing a support device consisting of horizontally and vertically arranged support elements,
- bending the formwork element into the desired shape for the concrete surface to be concreted,
- fastening the reinforcement on the support device, wherein spacers made from a non-corroding material are arranged between reinforcement and support device,
- positioning the formwork element on the spacers,
- fastening the formwork element on the reinforcement,
- applying shotcrete from the reinforcement side.

2. The method according to claim 1, **characterised in that** the flexible shrink-wrap films (4, 5) are polyethylene films.

3. The method according to one of claims 1 or 2, **characterised in that** the transverse (2) and longitudinal rods (3) of the latticework have a diameter of 1.7 mm to 3.0 mm, preferably a diameter of 1.9 mm to 2.5 mm, particularly preferably a diameter of around 2.0 mm.

4. The method according to one of claims 1 to 3, **characterised in that** the transverse rods (2) of the latticework and the longitudinal rods (3) of the latticework have the same diameter.

5. The method according to one of claims 1 to 4, **characterised in that** the openings of the latticework have a clear width of 60 mm to 100 mm, preferably a clear width of 70 mm to 80 mm.

6. The method according to one of claims 1 to 5, **characterised in that** the openings of the latticework have the shape of a square, a rectangle or a rhombus.

## Revendications

1. Procédé de fabrication de surfaces de béton formées irrégulièrement comprenant les éta pes
- de préparation d'un élément de coffrage pour la construction en béton, dans lequel l'élément de coffrage (1) est composé d'un treillis métallique constitué de barres transversales (2) et longitudinales (3) et de deux films rétractables (4, 5) flexibles couvrant le treillis des deux côtés, dans lequel les deux films rétractables (4, 5) sont reliés entre eux par les ouvertures du treillis, dans lequel les barres transversales (2) et longitudinales (3) du treillis présentent un diamètre de 1,5 mm à 3,5 mm et les ouvertures du treillis présentent un largeur intérieur de 50 mm à 120 mm, dans lequel il s'agit pour la largeur intérieure, de la plus grande distance existant entre les bords des barres délimitant les ouvertures, tournés vers les ouvertures du treillis,
- préparation d'une surface d'armature dotés d'écarteurs,
- préparation d'un dispositif d'appui composé d'élément d'appuis disposés horizontalement et verticalement,
- flexion de l'élément de coffrage dans la forme souhaitée pour la surface à bétonner,
- fixation de l'armature sur le dispositif d'appui, dans lequel des écarteurs en matériau non corrosif sont disposés entre l'armature et le dispositif d'appui,
- positionnement de l'élément de coffrage sur les écarteurs,
- fixation de l'élément de coffrage sur l'armature,
- application de béton projeté depuis le côté de l'armature.

2. Procédé selon la revendication 1, **caractérisé en ce que** les films rétractables (4, 5) sont des films de polyéthylène.

3. Procédé selon la revendication 1 ou 2, **caractérisé en ce que** les barres transversales (2) et longitudinales (3) du treillis présentent un diamètre de 1,7 mm à 3 mm, de préférence un diamètre de 1,9 mm à 2,5 mm, particulièrement de préférence un diamètre d'environ 2,0 mm.

4. Procédé selon l'une des revendications 1 à 3, **caractérisé en ce que** les barres transversales (2) du treillis et les barres longitudinales (3) du treillis présentent le même diamètre.

5. Procédé selon l'une des revendications 1 à 4, **caractérisé en ce que** les ouvertures du treillis présentent un largeur intérieur de 60 mm à 100 mm, de préférence un largeur intérieur de 70 mm à 80 mm.

6. Procédé selon l'une des revendications 1 à 5, **caractérisé en ce que** les ouvertures du treillis présentent la forme d'un carré, d'un rectangle ou d'un losange.
